# EUROPEAN PATENT APPLICATION

(11) **EP 4 362 528 A1**
(43) Date of publication of application: **01.05.2024**
(21) Application number: 21947157.0
(22) Date of filing: 24.06.2021
(51) Int. Cl.: H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/023989
(87) International publication number: WO 2022/269872

(57) **Abstract**

A terminal according to one aspect of the present disclosure includes a receiving section that receives indication of one or more transmission configuration indication (TCI) states, and a control section that determines whether to apply a single frequency network (SFN) scheme to reception of a physical downlink shared channel (PDCCH), based on the number of the TCI states. According to one aspect of the present disclosure, downlink signals from a plurality of transmission points can be appropriately received.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), in order to implement radio communication in a moving object (for example, a train or the like) that moves at a high speed, using beams transmitted from transmission points (for example, Remote Radio Heads (RRHs)) installed in a path of the moving object is assumed.

However, how a terminal receives downlink signals transmitted from a plurality of transmission points has not yet been fully studied. Unless such operations are clarified, reduction of throughput and the like may be caused.

In view of this, the present disclosure has one object to provide a terminal, a radio communication method, and a base station that appropriately receive downlink signals from a plurality of transmission points.

### Solution to Problem

A terminal according to one aspect of the present disclosure includes a receiving section that receives indication of one or more transmission configuration indication (TCI) states, and a control section that determines whether to apply a single frequency network (SFN) scheme to reception of a physical downlink shared channel (PDCCH), based on the number of the TCI states.

### Advantageous Effects of Invention

According to one aspect of the present disclosure, downlink signals from a plurality of transmission points can be appropriately received.

### Brief Description of Drawings

[FIG. 1] FIG. 1 is a diagram to show an example of activation of joint TCI states.
[FIG. 2] FIG. 2A and FIG. 2B are diagrams to show examples of activation of separate TCI states.
[FIG. 3] FIG. 3A and FIG. 3B are diagrams to show examples of indication of common TCI states for a single TRP.
[FIG. 4] FIG. 4A and FIG. 4B are diagrams to show examples of indication of common TCI states for a multi-TRP.
[FIG. 5] FIG. 5A and FIG. 5B are diagrams to show examples of communication between a moving object and transmission points (for example, RRHs).
[FIG. 6] FIG. 6A to FIG. 6C are diagrams to show examples of schemes 0 to 2 related to an SFN.
[FIG. 7] FIG. 7A and FIG. 7B are diagrams to show examples of scheme 1.
[FIG. 8] FIG. 8A to FIG. 8C are diagrams to show examples of a Doppler pre-compensation scheme.
[FIG. 9] FIG. 9A to FIG. 9D are diagrams to show examples of a delay profile and an average delay.
[FIG. 10] FIG. 10A and FIG. 10B are diagrams to show examples of specification method 1 for a specific TCI state for a PDSCH.
[FIG. 11] FIG. 11 is a diagram to show an example of specification method 2 for a specific TCI state for a PDSCH.
[FIG. 12] FIG. 12A and FIG. 12B are diagrams to show examples of specification method 1 for a specific TCI state for a PDCCH.
[FIG. 13] FIG. 13A and FIG. 13B are diagrams to show examples of specification method 2 for a specific TCI state for a PDCCH.
[FIG. 14] FIG. 14 is a diagram to show an example of a determination method for operation according to a fourth embodiment.
[FIG. 15] FIG. 15 is a diagram to show an example of a schematic structure of a radio communication system according to one embodiment.
[FIG. 16] FIG. 16 is a diagram to show an example of a structure of a base station according to one embodiment.
[FIG. 17] FIG. 17 is a diagram to show an example of a structure of a user terminal according to one embodiment.
[FIG. 18] FIG. 18 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS to have a relationship of QCL type X with (a DMRS for) a certain channel/signal, and this RS may be referred to as a QCL source of QCL type X in the TCI state.

### (Default TCI State/Default Spatial Relation/Default PL-RS)

In Rel. 16, the PDSCH may be scheduled with DCI having a TCI field. The TCI state for the PDSCH is indicated by the TCI field. The TCI field of DCI format 1-1 has 3 bits, and the TCI field of DCI format 1-2 has up to 3 bits.

In an RRC connected mode, when information of the TCI in first DCI (a higher layer parameter tci-PresentInDCI) is set to "enabled" for the CORESET to schedule the PDSCH, the UE assumes that the TCI field is present in DCI format 1_1 of the PDCCH to be transmitted in the CORESET.

When information of the TCI in second DCI (a higher layer parameter tci-PresentInDCI-1-2) for the CORESET to schedule the PDSCH is configured for the UE, the UE assumes that the TCI field having a DCI field size indicated by the information of the TCI in the second DCI is present in DCI format 1_2 of the PDSCH to be transmitted in the CORESET.

In Rel. 16, the PDSCH may be scheduled with DCI not having a TCI field. The DCI format of the DCI may be DCI format 1_0, or DCI format 1_1/1_2 in a case where the information of the TCI in the DCI (the higher layer parameter tci-PresentInDCI or tci-PresentInDCI-1-2) is not configured (to be enabled). When the PDSCH is scheduled with the DCI not having a TCI field, and a time offset between reception of DL DCI (DCI (scheduling DCI) to schedule the PDSCH) and a corresponding PDSCH (PDSCH scheduled by the DCI) is equal to or more than a threshold value (timeDurationForQCL), the UE assumes that the TCI state or the QCL assumption for the PDSCH is the same as the TCI state or the QCL assumption of the CORESET (for example, the scheduling DCI).

In the RRC connected mode, in both a case where information of the TCI in the DCI (the higher layer parameters tci-PresentInDCI and tci-PresentInDCI-1-2) is set to "enabled" and a case where the information of the TCI in the DCI is not configured, when a time offset between reception of DL DCI (DCI to schedule the PDSCH) and a corresponding PDSCH (PDSCH scheduled by the DCI) is less than the threshold value (timeDurationForQCL) (application condition, first condition), and in a case of non-cross carrier scheduling, a TCI state (default TCI state) for the PDSCH may be a TCI state with the lowest CORESET ID in the latest slot in an active DL BWP for that CC (for a specific UL signal). In cases other than the case, the TCI state (default TCI state) for the PDSCH may be a TCI state with the lowest TCI state ID of a PDSCH in an active DL BWP for a scheduled CC.

In Rel. 15, individual MAC CEs, that are a MAC CE for PUCCH spatial relation activation/deactivation and a MAC CE for SRS spatial relation activation/deactivation, are necessary. A PUSCH spatial relation follows the SRS spatial relation.

In Rel. 16, at least one of the MAC CE for PUCCH spatial relation activation/deactivation and the MAC CE for SRS spatial relation activation/deactivation need not be used.

If both a spatial relation and a PL-RS for a PUCCH are not configured in FR2 (application condition, second condition), default assumption for the spatial relation and PL-RS (default spatial relation and default PL-RS) is applied to the PUCCH. If both a spatial relation and a PL-RS for an SRS (SRS resource for the SRS or SRS resource corresponding to SRI in DCI format 0_1 to schedule a PUSCH) are not configured in FR2 (application condition, second condition), default assumption for the spatial relation and PL-RS (default spatial relation and default PL-RS) is applied to the PUSCH scheduled by DCI format 0_1, and the SRS.

If a CORESET is configured in an active DL BWP on that CC (application condition), the default spatial relation and default PL-RS may be a TCI state or QCL assumption for a CORESET having the lowest CORESET ID in the active DL BWP. If a CORESET is not configured in the active DL BWP on that CC, the default spatial relation and default PL-RS may be an active TCI state having the lowest ID for a PDSCH in the active DL BWP.

In Rel. 15, a spatial relation for a PUSCH scheduled by DCI format 0_0 follows a spatial relation for a PUCCH resource having the lowest PUCCH resource ID, out of active spatial relations for PUCCHs on the same CC. A network needs to update PUCCH spatial relations on all SCells even when the PUCCH is not transmitted on the SCell.

In Rel. 16, PUCCH configuration for the PUSCH scheduled by DCI format 0_0 is unnecessary. When an active PUCCH spatial relation or a PUCCH resource for the PUSCH scheduled by DCI format 0_0 is absent on an active UL BWP in that CC (application condition, second condition), the default spatial relation and default PL-RS are applied to the PUSCH.

A condition for application of the default spatial relation/default PL-RS for the SRS may include a case that an information element for enabling a default beam pathloss for the SRS (higher layer parameter enableDefaultBeamPlForSRS) is set to "enabled." A condition for application of the default spatial relation/default PL-RS for the PUCCH may include a case that an information element for enabling a default beam pathloss for the PUCCH (higher layer parameter enableDefaultBeamPlForPUCCH) is set to "enabled." A condition for application of the default spatial relation/default PL-RS for the PUSCH scheduled by DCI format 0_0 may include a case that an information element for enabling a default beam pathloss for the PUSCH scheduled by DCI format 0_0 (higher layer parameter enableDefaultBeamPlForPUSCHO_0) is set to "enabled."

The above-described threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," a schedule offset threshold value, a scheduling offset threshold value, or the like.

When an offset between reception of DL DCI and the PDSCH corresponding thereto is less than the threshold value timeDurationForQCL, at least one TCI state configured for the serving cell of the scheduled PDSCH includes "QCL type D", the UE is configured with a parameter for enabling two default TCIs (enableTwoDefaultTCIStates-r16), and at least one TCI codepoint indicates two TCI states, the UE assumes that a DMRS port of a PDSCH or PDSCH transmission occasion of the serving cell is quasi co-located with an RS related to a QCL parameter associated with two TCI states corresponding to the lowest codepoint out of the TCI codepoints including two different TCI states. The parameter for enabling two default TCIs indicates that operations of Rel. 16 for two default TCI states for the PDSCH when at least one TCI codepoint is mapped to two TCI states are enabled.

### (Unified/Common TCI Framework)

According to a unified TCI framework, UL and DL channels can be controlled by a common framework. Instead of defining a TCI state or a spatial relation for each channel in a manner similar to that of Rel. 15, the unified TCI framework may indicate a common beam (common TCI state) and apply the common beam to all UL and DL channels, or may apply a UL common beam to all UL channels and apply a DL common beam to all DL channels.

One common beam for both DL and UL or a DL common beam and a UL common beam (two common beams in total) are under study.

The UE may assume the same TCI state (joint TCI state, joint TCI pool, joint common TCI pool, joint TCI state set) for the UL and the DL. The UE may assume different TCI states (separate TCI states, separate TCI pools, a UL separate TCI pool and a DL separate TCI pool, separate common TCI pools, a UL common TCI pool and a DL common TCI pool) for the respective UL and DL.

Default beams for the UL and DL may be unified by MAC CE-based beam management (MAC CE-level beam indication). The default beams may be unified with a default UL beam (spatial relation) by updating a default TCI state for the PDSCH.

A common beam/unified TCI state may be indicated from the same TCI pool for both of the UL and the DL (joint common TCI pool, joint TCI pool, set), using DCI-based beam management (DCI-level beam indication). X (> 1) TCI states may be activated by the MAC CE. The UL/DL DCI may select one TCI state from X active TCI states. The selected TCI state may be applied to channels/RSs for both of the UL and DL.

The TCI pool (set) may be a plurality of TCI states configured by an RRC parameter, or may be a plurality of TCI states (active TCI states, an active TCI pool, a set) activated by the MAC CE out of the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to UL channels/RSs and the number M (≥ 1) of TCI states (DL TCI states) applied to DL channels/RSs may be defined. At least one of N and M may be notified/configured/indicated to the UE via higher layer signaling/physical layer signaling.

In the present disclosure, description of N = M = X (X is any integer) may mean that X TCI states (joint TCI states) (corresponding to X TRPs) common to the UL and the DL are notified/configured/indicated to the UE. Description of N = X (X is any integer) and M = Y (Y is any integer and Y may be equal to X) may mean that X UL TCI states (corresponding to X TRPs) and Y DL TCI states (corresponding to Y TRPs) (that is, separate TCI states) are separately notified/configured/indicated to the UE.

For example, description of N = M = 1 may mean that one TCI state common to the UL and the DL for a single TRP is notified/configured/indicated to the UE (joint TCI state for a single TRP).

For example, description of N = 1 and M = 1 may mean that one UL TCI state and one DL TCI state for a single TRP are separately notified/configured/indicated to the UE (separate TCI states for a single TRP) .

For example, description of N = M = 2 may mean that a plurality of (two) TCI states common to the UL and the DL for a plurality of (two) TRPs are notified/configured/indicated to the UE (joint TCI states for a plurality of TRPs).

For example, description of N = 2 and M = 2 may mean that a plurality of (two) UL TCI states and a plurality of (two) DL TCI states for a plurality of (two) TRPs are notified/configured/indicated to the UE (separate TCI states for a plurality of TRPs).

Note that, although the above examples describe cases in which the value of N and M is 1 or 2, the value of N and M may be 3 or greater, and N may be different from M.

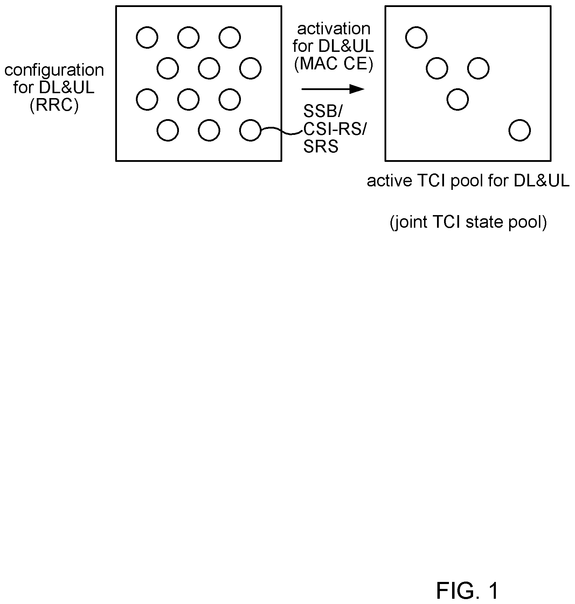

FIG. 1 shows an example of activation of joint TCI states. One or more joint TCI states are configured by an RRC IE, and one or more joint TCI states out of the one or more joint TCI states are activated by a MAC CE. The one or more activated joint TCI states may be referred to as an active TCI state pool, an active joint TCI state pool, or the like.

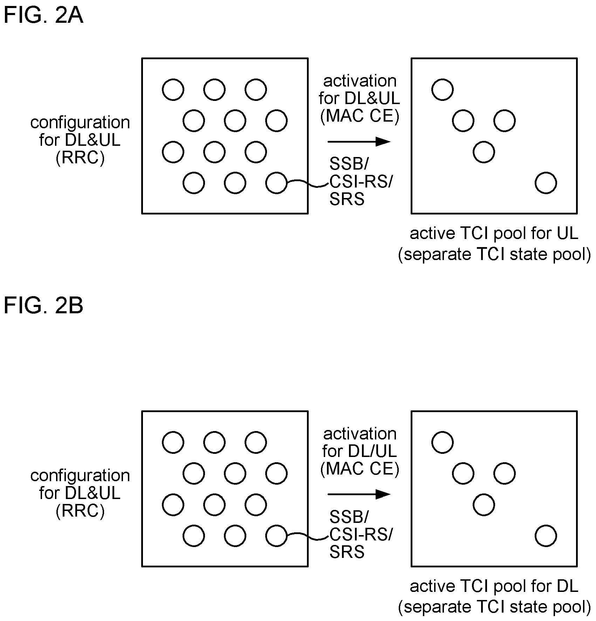

FIGS. 2A and 2B show examples of activation of separate TCI states. As shown in FIG. 2A, one or more UL TCI states are configured by an RRC IE, and one or more UL TCI states out of the one or more UL TCI states are activated by a MAC CE. As shown in FIG. 2B, one or more DL TCI states are configured by an RRC IE, and one or more DL TCI states out of the one or more DL TCI states are activated by a MAC CE. The one or more activated UL TCI states may be referred to as an active TCI state pool, an active UL TCI state pool, an active separate TCI state pool, or the like. The one or more activated DL TCI states may be referred to as an active TCI state pool, an active DL TCI state pool, an active separate TCI state pool, or the like.

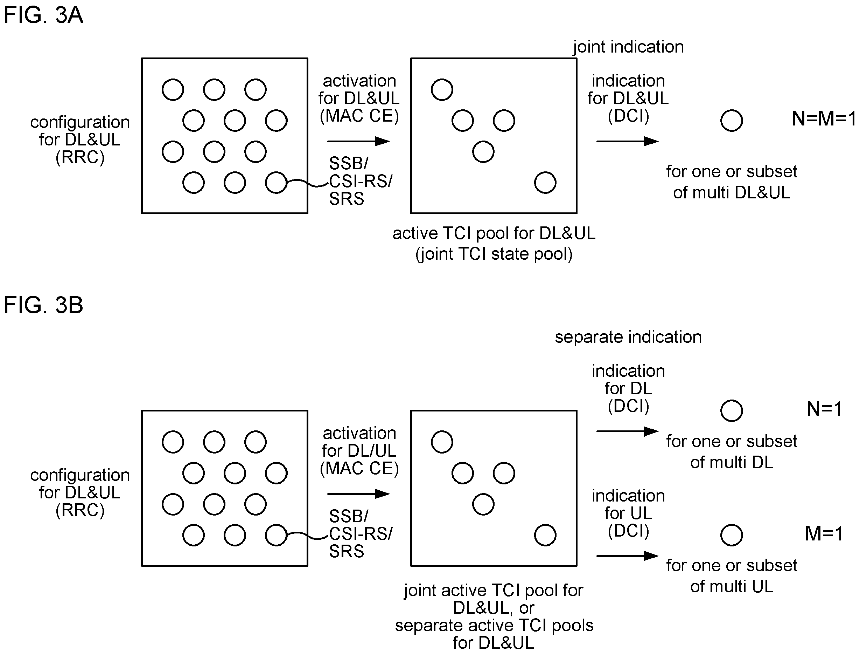

FIG. 3A shows an example of indication of a joint TCI state for a single TRP. N = M joint TCI states out of one or more joint TCI states are indicated by DCI. When N = M = 1, a single joint TCI state for a single TRP is indicated. The TCI state is applied to both of the UL and the DL.

FIG. 3B shows an example of indication of a separate TCI state for a single TRP. N UL TCI states out of one or more UL TCI states are indicated by DCI. M DL TCI states out of one or more DL TCI states are indicated by DCI. When N = 1 and M = 1, a single separate TCI state for a single TRP is indicated (one UL TCI state and one DL TCI state are separately indicated). One UL TCI state is applied to the UL. One DL TCI state is applied to the DL.

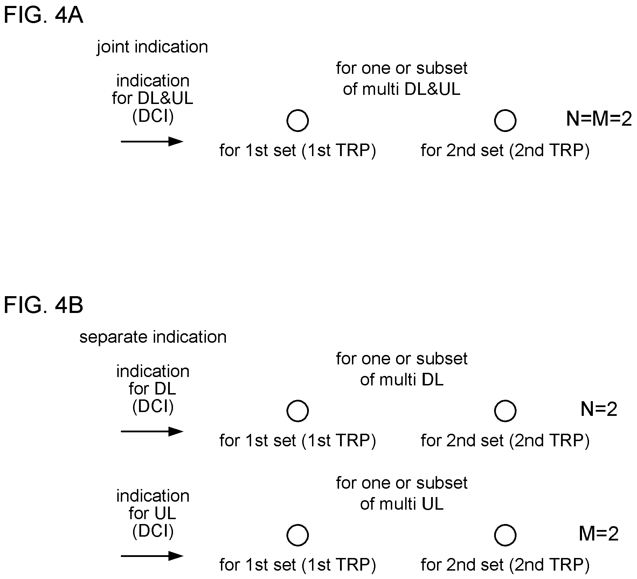

FIG. 4A shows another example of indication of joint TCI states for a multi-TRP. When N = M = 2, two joint TCI states for two TRPs (two sets of single joint TCI states) are indicated. A first joint TCI state (a first set) corresponds to a first TRP. A second joint TCI state (a second set) corresponds to a second TRP.

FIG. 4B shows another example of indication of separate TCI states for a multi-TRP. When N = 2 and M = 2, two separate TCI states for two TRPs (two sets of single separate TCI states) are indicated. A first UL TCI state (a first set) corresponds to a first TRP. A second UL TCI state (a second set) corresponds to a second TRP. A first DL TCI state (a first set) corresponds to a first TRP. A second DL TCI state (a second set) corresponds to a second TRP.

### (Multi-TRP)

In NR, a scheme in which one or a plurality of transmission/reception points (TRPs) (multi-TRP (multi TRP (MTRP))) perform DL transmission to the UE by using one or a plurality of panels (multi-panel) has been under study. In addition, a scheme in which the UE performs UL transmission to one or a plurality of TRPs by using one or a plurality of panels has been under study.

Note that the plurality of TRPs may correspond to the same cell identifier (ID), or may correspond to different cell IDs. The cell ID(s) may be physical cell ID(s), or may be virtual cell ID(s).

The multi-TRP (for example, TRPs #1 and #2) is connected with an ideal/non-ideal backhaul, and information, data, and the like may be exchanged therebetween. Different codewords (Code Word, CWs) and different layers may be transmitted from each TRP of the multi-TRP. As one mode of multi-TRP transmission, non-coherent joint transmission (NCJT) may be used.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that it may be defined that a plurality of PDSCHs (multi-PDSCH) subjected to NCJT partially or entirely overlap in at least one of time and frequency domains. In other words, at least one of the time and frequency resources of the first PDSCH from the first TRP and the second PDSCH from the second TRP may overlap.

It may be assumed that these first PDSCH and second PDSCH are not in a relationship of quasi-co-location (QCL) (not quasi-co-located). Reception of the multi-PDSCH may be interpreted as simultaneous reception of PDSCHs that are not of a certain QCL type (for example, QCL type D).

The plurality of PDSCHs (which may be referred to as multi-PDSCH (multiple PDSCHs)) from the multi-TRP may be scheduled using one piece of DCI (single DCI, single PDCCH) (single master mode, multi-TRP based on single DCI (single-DCI based multi-TRP)). The plurality of PDSCHs from the multi-TRP may be scheduled using a plurality of pieces of DCI (multi-DCI, multi-PDCCH (multiple PDCCHs)) (multi-master mode, multi-TRP based on multi-DCI (multi-DCI based multi-TRP)).

In Ultra-Reliable and Low Latency Communications (URLLC) for the multi-TRP, support of PDSCH (transport block (TB) or codeword (CW)) repetition across the multi-TRP has been under study. Support of repetition schemes (URLLC schemes, reliability enhancement schemes, for example, schemes 1a, 2a, 2b, 3, and 4) across the multi-TRP in the frequency domain, the layer (space) domain, or the time domain has been under study. In scheme 1a, the multi-PDSCH from the multi-TRP is subjected to space division multiplexing (SDM). In schemes 2a and 2b, the PDSCH from the multi-TRP is subjected to frequency division multiplexing (FDM). In scheme 2a, the redundancy versions (RVs) are the same for the multi-TRP. In scheme 2b, the RVs may be the same or may be different from one another for the multi-TRP. In schemes 3 and 4, the multi-PDSCH from the multi-TRP is subjected to time division multiplexing (TDM). In scheme 3, the multi-PDSCH from the multi-TRP is transmitted in one slot. In scheme 4, the multi-PDSCH from the multi-TRP is transmitted in different slots.

According to the multi-TRP scenario as described above, more flexible transmission control using a channel having satisfactory quality can be performed.

In order to support multi-TRP transmission within a cell ("intracell", having the same cell ID) and among cells ("inter-cell", having different cell IDs) based on a plurality of PDCCHs, in RRC configuration information for linking a plurality of pairs of PDCCHs and PDSCHs having a plurality of TRPs, one control resource set (CORESET) in PDCCH configuration information (PDCCH-Config) may correspond to one TRP.

When at least one of the following conditions 1 and 2 is satisfied, the UE may determine the multi-TRP based on multi-DCI. In this case, the TRP may be interpreted as a CORESET pool index.

### [Condition 1]

One CORESET pool index is configured.

### [Condition 2]

Two different values (for example, 0 and 1) of the CORESET pool index are configured.

When the following condition is satisfied, the UE may determine the multi-TRP based on single DCI. In this case, two TRPs may be interpreted as two TCI states indicated by a MAC CE/DCI.

### [Condition]

In order to indicate one or two TCI states for one codepoint of a TCI field in the DCI, an "Enhanced TCI States Activation/Deactivation for UE-specific PDSCH MAC CE" is used.

The DCI for common beam indication may be a UE-specific DCI format (for example, a DL DCI format (for example, 1_1, 1_2), a UL DCI format (for example, 0_1, 0_2)), or may be a UE-group common DCI format.

### (SFN PDCCH)

Regarding the PDCCH/CORESET defined in Rel. 15, one TCI state without a CORESET pool index (CORESETPoolIndex) (which may be referred to as TRP information (TRP Info)) is configured for one CORESET.

Regarding enhancements of the PDCCH/CORESET defined in Rel. 16, in the multi-TRP based on multi-DCI, the CORESET pool index is configured for each CORESET.

In Rel. 17 or later versions, the following enhancements 1 and 2 related to the PDCCH/CORESET have been under study.

In a case in which a plurality of antennas (small antennas, transmission/reception points) having the same cell ID form a single frequency network (SFN), up to two TCI states can be configured/activated for one CORESET, using higher layer signaling (RRC signaling/MAC CE) (enhancement 1). The SFN contributes to at least one of operation and reliability enhancement of an HST (high speed train).

In repetition transmission of the PDCCH (which may be simply referred to as "repetition"), two PDCCH candidates in two search space sets are linked to each other, and each search space set is associated with a corresponding CORESET (enhancement 2). The two search space sets may be associated with the same or different CORESET(s). For one CORESET, one (up to one) TCI state can be configured/activated using higher layer signaling (RRC signaling/MAC CE).

If the two search space sets are associated with different CORESETs having different TCI states, this may mean repetition transmission for a multi-TRP. If the two search space sets are associated with the same CORESET (CORESET having the same TCI state), this may mean repetition transmission for a single TRP.

### (HST)

In LTE, installation of an HST (high speed train) in a tunnel is difficult. A large antenna performs transmission to the outside/inside a tunnel. For example, a transmit power of a large antenna is approximately from 1 to 5 W. For handover, it is important to perform transmission to the outside of the tunnel before the UE enters the tunnel. For example, a transmit power of a small antenna is approximately 250 mW. A plurality of small antennas (transmission/reception points) having the same cell ID and having a distance of 300 m form a single frequency network (SFN). All of the small antennas in the SFN transmit the same signal in the same PRB at the same time. A terminal is assumed to perform transmission and reception to and from one base station. In actuality, a plurality of transmission/reception points transmit the same DL signal. In high-speed movement, transmission/reception points in a unit of several kilometers form one cell. In movement across cells, handover is performed. This allows the handover to be less frequent.

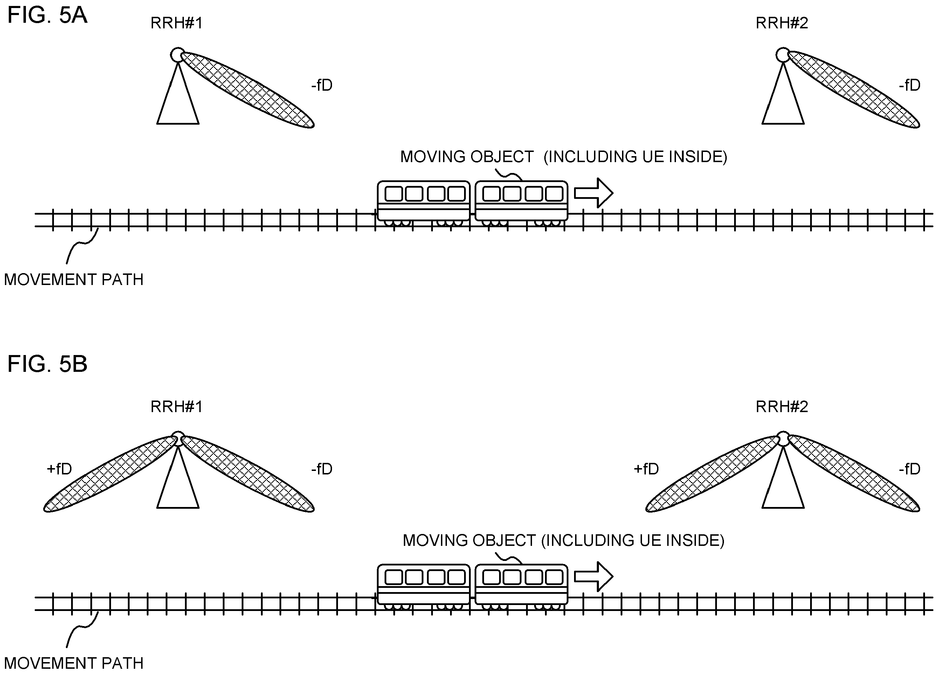

In NR, in order to perform communication with a terminal (hereinafter also referred to as a UE) included in a moving object (HST (high speed train)), such as a train, that moves at a high speed, using beams transmitted from transmission points (for example, RRHs) is assumed. In existing systems (for example, Rel. 15), performing communication with the moving object by transmitting uni-directional beams from the RRHs is supported (see FIG. 5A).

FIG. 5A shows a case in which the RRHs are installed along a movement path (or a moving direction, a traveling direction, a traveling path) of the moving object, and a beam is formed from each RRH toward the side of the traveling direction of the moving object. The RRH that forms the uni-directional beam may be referred to as a uni-directional RRH. In the example shown in FIG. 5A, the moving object receives a negative Doppler shift (-f_{D}) from each RRH.

Note that, here, a case is shown in which a beam is formed toward the side of the traveling direction of the moving object, but this is not restrictive, and a beam may be formed toward the side of a direction opposite to the traveling direction or a beam may be formed in every direction regardless of the traveling direction of the moving object.

In Rel. 16 and later versions, it is also assumed that a plurality of (for example, two or more) beams are transmitted from the RRH. For example, it is assumed that the beams are formed in both of the traveling direction of the moving object and a direction opposite to the traveling direction (see FIG. 5B).

FIG. 5B shows a case in which the RRHs are installed along the movement path of the moving object and beams are formed from each RRH toward both of the side of the traveling direction of the moving object and the side of the direction opposite to the traveling direction. The RRH that forms the beams of the plurality of directions (for example, two directions) may be referred to as a bi-directional RRH.

In the HST, the UE performs communication, similarly to a single TRP. In base station implementation, transmission from a plurality of TRPs (same cell ID) can be performed.

In the example of FIG. 5B, when two RRHs (here, RRH #1 and RRH #2) use the SFN and the moving object is located between the two RRHs, a signal subjected to a negative Doppler shift switches to a signal subjected to a positive Doppler shift having higher power. In this case, the largest change in the Doppler shift to require correction is a change from -f_{D} to +f_{D}, which is twice as large as that in the case of the uni-directional RRH.

Note that, in the present disclosure, a positive Doppler shift may be interpreted as information related to a positive Doppler shift, a Doppler shift in a positive direction, and Doppler information in a positive direction. A negative Doppler shift may be interpreted as information related to a negative Doppler shift, a Doppler shift in a negative direction, and Doppler information in a negative direction.

Here, as schemes for the HST, the following scheme 0 to scheme 2 (HST scheme 0 to HST scheme 2) are compared.

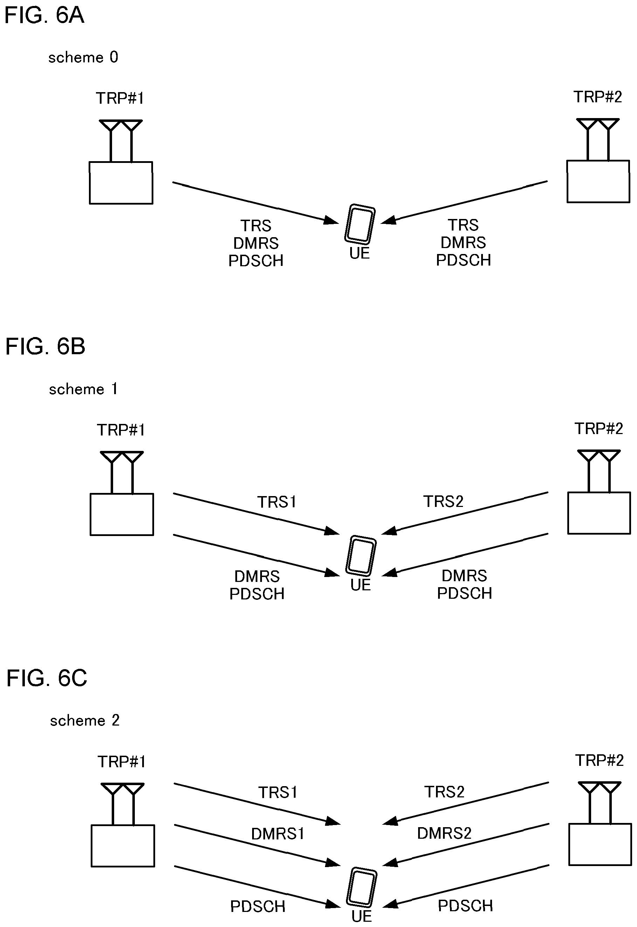

In scheme 0 of FIG. 6A, a tracking reference signal (TRS), a DMRS, and a PDSCH are transmitted to be common to two TRPs (RRHs) (using the same time and the same frequency resources) (a normal SFN, a transparent SFN, an

### HST-SFN).

In scheme 0, the UE receives DL channels/signals corresponding to a single TRP, and thus there is one TCI state of the PDSCH.

Note that, in Rel. 16, an RRC parameter for distinguishing transmission using a single TRP and transmission using an SFN is defined. When the UE reports corresponding UE capability information, the UE may distinguish reception of DL channels/signals of the single TRP and reception of the PDSCH assuming the SFN, based on the RRC parameter. In contrast, the UE may assume the single TRP and perform transmission and reception using the SFN.

In scheme 1 of FIG. 6B, TRSs are transmitted to be specific to respective TRPs (by using different time/frequency resources for the respective TRPs). In the example, TRS 1 is transmitted from TRP #1, and TRS 2 is transmitted from TRP #2.

In scheme 1, the UE receives DL channels/signals from respective TRPs by using the TRSs from the respective TRPs, and thus there are two TCI states of the PDSCH.

In scheme 2 of FIG. 6C, TRSs and DMRSs are transmitted to be specific to respective TRPs. In the example, TRS 1 and DMRS 1 are transmitted from TRP #1, and TRS 2 and DMRS 2 are transmitted from TRP #2. In comparison to scheme 0, schemes 1 and 2 can reduce sudden changes of Doppler shifts, and can allow appropriate estimation/compensation of the Doppler shifts. The DMRSs of scheme 2 are increased more than the DMRSs of scheme 1, and thus maximum throughput of scheme 2 is lower than that of scheme 1.

In scheme 0, the UE switches the single TRP and the SFN, based on higher layer signaling (RRC information element/MAC CE).

The UE may switch scheme 1/scheme 2/NW pre-compensation scheme, based on higher layer signaling (RRC information element/MAC CE).

In scheme 1, two TRS resources are configured, that are for the traveling direction of the HST and a direction opposite to the traveling direction.

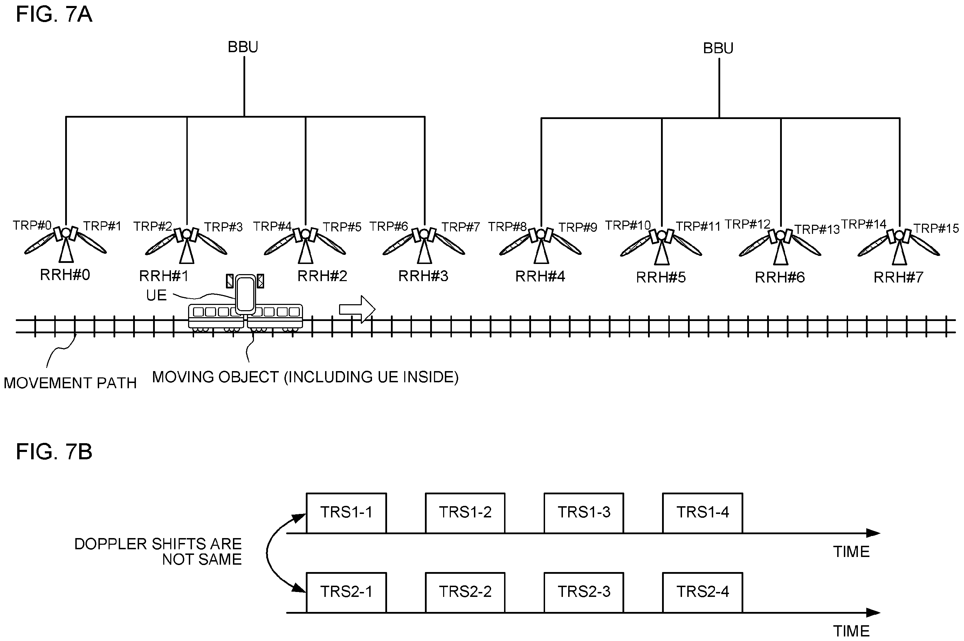

In the example of FIG. 7A, the TRPs (TRPs #0, #2, ...) that transmit a DL signal in the direction opposite to the HST transmit a first TRS (TRS coming from ahead of the HST) in the same time and frequency resources (SFN). The TRPs (TRPs #1, #3, ...) that transmit a DL signal in the traveling direction of the HST transmit a second TRS (TRS coming from behind the HST) in the same time and frequency resources (SFN). The first TRS and the second TRS may be transmitted/received using frequency resources different from each other.

In the example of FIG. 7B, TRSs 1-1 to 1-4 are transmitted as the first TRS, and TRSs 2-1 to 2-4 are transmitted as the second TRS.

In consideration of operation of beams, the first TRS is transmitted using 64 beams and 64 time resources, and the second TRS is transmitted using 64 beams and 64 time resources. The beams of the first TRS and the beams of the second TRS are considered to be the same (the QCL type D RSs are the same). By multiplexing the first TRS and the second TRS on the same time resources and different frequency resources, resource use efficiency can be enhanced.

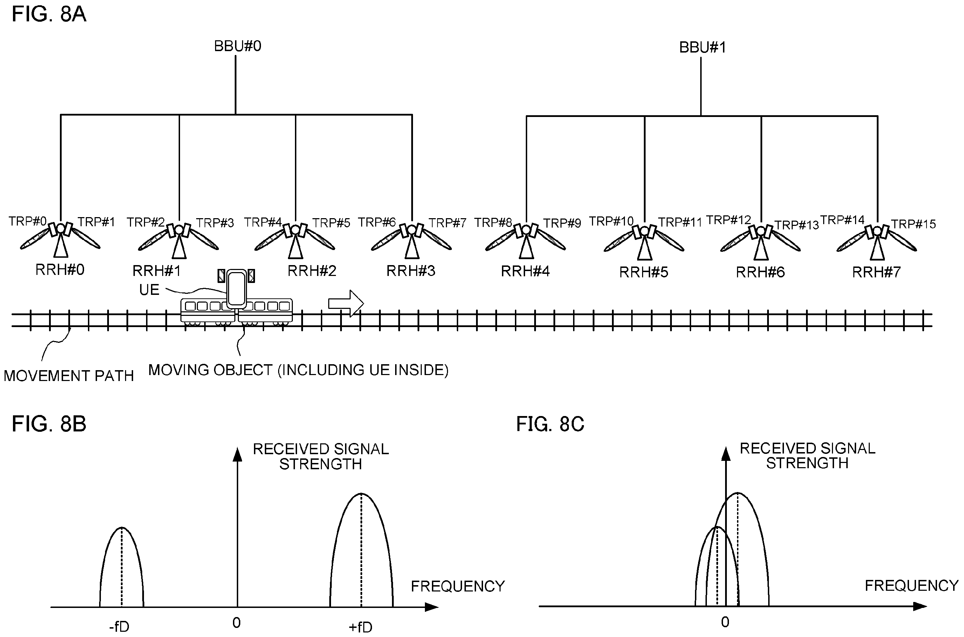

In the example of FIG. 8A, RRHs #0 to #7 are installed along the movement path of the HST. RRHs #0 to #3 and RRHs #4 to #7 are connected to baseband units (BBUs) #0 and #1, respectively. Each RRH is a bi-directional RRH, and forms beams using each transmission/reception point (TRP) in both of the traveling direction of the movement path and the direction opposite to the traveling direction.

In received signals in the example of FIG. 8B (single TRP (SFN)/scheme 1), when the UE receives signals/channels (beams in the traveling direction of the HST, beams from behind the UE) transmitted from TRPs #2n-1 (n is an integer of 0 or greater), a negative Doppler shift (in the example, -fD) occurs. When the UE receives signals/channels (beams in the direction opposite to the traveling direction of the HST, beams from ahead of the UE) transmitted from TRPs #2n (n is an integer of 0 or greater), a positive Doppler shift (in the example, +fD) occurs.

In Rel. 17 or later versions, the following has been under study in which the base station performs a Doppler pre-(preliminary) compensation (correction) scheme (a Pre-Doppler Compensation scheme, a Doppler pre-Compensation scheme, and a network (NW) pre-compensation scheme (an NW pre-compensation scheme and an HST NW pre-compensation scheme)) in transmission of downlink (DL) signals/channels to the UE in the HST from the TRP. The TRP performs Doppler compensation in advance for transmission of DL signals/channels to the UE, so that influence of Doppler shifts in the UE at the time of reception of the DL signals/channels can be reduced. In the present disclosure, the Doppler pre-compensation scheme may be a combination of scheme 1 and pre-compensation of Doppler shifts by the base station.

In the Doppler pre-compensation scheme, the following has been under study in which the TRS from each TRP is transmitted without being subjected to Doppler pre-compensation, and the PDSCH from each TRP is transmitted by being subjected to Doppler pre-compensation.

In the Doppler pre-compensation scheme, the TRPs that form beams toward the side of the traveling direction of the movement path and the TRPs that form beams toward the side of the direction opposite to the traveling direction of the movement path perform transmission of the DL signals/channels to the UE in the HST after performing Doppler correction. In the example, TRPs #2n-1 perform positive Doppler correction and TRPs #2n perform negative Doppler correction, and influence of Doppler shifts in the UE at the time of reception of signals/channels is thereby reduced (FIG. 8C) .

Note that, in the situation of FIG. 8C, the UE receives DL channels/signals from respective TRPs by using the TRSs from the respective TRPs, and thus there may be two TCI states of the PDSCH.

In addition, in Rel. 17 or later versions, dynamically switching between the single TRP and the SFN by using the TCI field (TCI state field) has been under study. For example, one or two TCI states are configured/indicated in each TCI codepoint (codepoint of the TCI field, the DCI codepoint), using an RRC information element/MAC CE (for example, the Enhanced TCI States Activation/Deactivation for UE-specific PDSCH MAC CE)/DCI (TCI field). When one TCI state is configured/indicated, the UE may determine to receive the PDSCH of the single TRP. When two TCI states are configured/indicated, the UE may determine to receive the PDSCH of the SFN using the multi-TRP.

### (Analysis)

At least in frequency range 1 (FR1), definition of both of scheme 1 and the Doppler pre-compensation scheme in specifications has been under study. Application of these schemes to the PDSCH, the PDCCH, and the DMRSs thereof has been under study.

For the PDSCH, dynamically switching between scheme 1 and the single TRP depending on the number of TCI states indicated by the TCI field has been under study. For the PDSCH, dynamically switching between the Doppler pre-compensation scheme and the single TRP depending on the number of TCI states indicated by the TCI field has been under study.

If the UE does not have a UE capability for these dynamic switches, notification of two TCI states to all of the codepoints in the TCI field by a MAC CE has been under study.

Switching between scheme 1 and the Doppler pre-compensation scheme by an RRC IE has been under study.

However, a method of configuration/indication for scheme 1/Doppler pre-compensation scheme/single TRP has not yet been fully studied. Unless the study is fully conducted, the UE cannot appropriately perform reception of DL signals/channels, and reduction of communication quality/throughput may be caused.

In view of this, the inventors of the present invention came up with the idea of a method of configuration/indication for scheme 1/Doppler pre-compensation scheme/single TRP.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, to support, to control, to be able to control, to operate, and to be able to operate may be interchangeably interpreted.

In the present disclosure, configure, activate, update, indicate, enable, specify, and select may be interchangeably interpreted.

In the present disclosure, the higher layer signaling may be, for example, any one of Radio Resource Control (RRC) signaling, Medium Access Control (MAC) signaling, broadcast information, and the like, or a combination of these. In the present disclosure, RRC, RRC signaling, an RRC parameter, a higher layer, a higher layer parameter, an RRC information element (IE), an RRC message, and a configuration may be interchangeably interpreted.

As the MAC signaling, for example, a MAC control element (MAC CE), a MAC Protocol Data Unit (PDU), or the like may be used. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, a space setting, a TCI state, a UL TCI state, a unified TCI state, a unified beam, a common TCI state, a common beam, a TCI assumption, a QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a source of a DL-RS, an SSB, a CSI-RS, and an SRS may be interchangeably interpreted.

In the present disclosure, a panel, an Uplink (UL) transmission entity, a TRP, a spatial relation, a control resource set (CORESET), a PDSCH, a codeword, a base station, an antenna port of a certain signal (for example, a demodulation reference signal (DMRS) port), an antenna port group of a certain signal (for example, a DMRS port group), a group for multiplexing (for example, a code division multiplexing (CDM) group, a reference signal group, a CORESET group), a CORESET pool, a CORESET subset, a CW, a redundancy version (RV), and a layer (a multi-input multi-output (MIMO) layer, a transmission layer, a spatial layer) may be interchangeably interpreted. A panel Identifier (ID) and a panel may be interchangeably interpreted. In the present disclosure, a TRP ID and a TRP may be interchangeably interpreted.

The panel may relate to at least one of a group index of an SSB/CSI-RS group, a group index of a group-based beam report, and a group index of an SSB/CSI-RS group for a group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, it may be assumed that the single PDCCH (DCI) is supported when the multi-TRP uses an ideal backhaul. It may be assumed that the multi-PDCCH (DCI) is supported when the multi-TRP uses a non-ideal backhaul.

Note that the ideal backhaul may be referred to as DMRS port group type 1, reference signal related group type 1, antenna port group type 1, CORESET pool type 1, or the like. The non-ideal backhaul may be referred to as DMRS port group type 2, reference signal related group type 2, antenna port group type 2, CORESET pool type 2, or the like. Terms are not limited to these.

In the present disclosure, a single TRP, a single TRP system, a single TRP transmission, and a single PDSCH may be interchangeably interpreted. In the present disclosure, a multi-TRP, a multi-TRP system, multi-TRP transmission, and a multi-PDSCH may be interchangeably interpreted. In the present disclosure, single DCI, a single PDCCH, multi-TRP based on single DCI, and activation of two TCI states in at least one TCI codepoint may be interchangeably interpreted.

In the present disclosure, a single TRP, a channel using a single TRP, a channel using one TCI state/spatial relation, no enabling of a multi-TRP by RRC/DCI, no enabling of a plurality of TCI states/spatial relations by RRC/DCI, and no configuration of one CORESET pool index (CORESETPoolIndex) value for any of the CORESETs and no mapping of any codepoint of a TCI field to two TCI states may be interchangeably interpreted.

In the present disclosure, a multi-TRP, a channel using a multi-TRP, a channel using a plurality of TCI states/spatial relations, enabling of a multi-TRP by RRC/DCI, enabling of a plurality of TCI states/spatial relations by RRC/DCI, and at least one of multi-TRP based on single DCI and multi-TRP based on multi-DCI may be interchangeably interpreted. In the present disclosure, multi-TRP based on multi-DCI and configuration of one CORESET pool index (CORESETPoolIndex) value for the CORESET may be interchangeably interpreted. In the present disclosure, multi-TRP based on single DCI and mapping of at least one codepoint of a TCI field to two TCI states may be interchangeably interpreted.

In the present disclosure, TRP #1 (first TRP) may correspond to CORESET pool index = 0, or may correspond to a first TCI state of two TCI states corresponding to one codepoint of a TCI field. TRP #2 (second TRP) may correspond to CORESET pool index = 1, or may correspond to a second TCI state of the two TCI states corresponding to one codepoint of the TCI field.

In the present disclosure, single DCI (sDCI), a single PDCCH, a single-DCI based multi-TRP system, an sDCI based MTRP, and activation of two TCI states in at least one TCI codepoint may be interchangeably interpreted.

In the present disclosure, multi-DCI (mDCI), a multi-PDCCH, a multi-DCI based multi-TRP system, an mDCI based MTRP, and configuration of two CORESET pool indices or CORESET pool index = 1 (or value of one or more) may be interchangeably interpreted.

QCL in the present disclosure may be interchangeably interpreted as QCL type D.

"TCI state A is of the same QCL type D as TCI state B", "TCI state A is the same as TCI state B", "TCI state A is of QCL type D with TCI state B", and the like in the present disclosure may be interchangeably interpreted.

In the present disclosure, a DMRS, a DMRS port, and an antenna port may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a tracking CSI-RS, a CSI-RS having TRS information (a higher layer parameter trs-Info), NZP CSI-RS resources in an NZP CSI-RS resource set having TRS information, NZP-CSI-RS resources in an NZP-CSI-RS resource set including a plurality of NZP-CSI-RS resources of the same antenna port, and TRS resources may be interchangeably interpreted. In the present disclosure, CSI-RS resources, a CSI-RS resource set, a CSI-RS resource group, and an information element (IE) may be interchangeably interpreted.

In the present disclosure, a codepoint of a DCI field 'Transmission Configuration Indication', a TCI codepoint, a DCI codepoint, and a codepoint of a TCI field may be interchangeably interpreted.

In the present disclosure, a single TRP and an SFN may be interchangeably interpreted. In the present disclosure, an HST, an HST scheme, a scheme for high-speed movement, scheme 1, scheme 2, a NW pre-compensation scheme, HST scheme 1, HST scheme 2, and an HST NW pre-compensation scheme may be interchangeably interpreted.

In the present disclosure, a PDSCH/PDCCH using a single TRP may be interpreted as a PDSCH/PDCCH based on a single TRP and a single TRP PDSCH/PDCCH. In the present disclosure, a PDSCH/PDCCH using an SFN may be interpreted as a PDSCH/PDCCH using an SFN in multi TRP, a PDSCH/PDCCH based on an SFN, and an SFN PDSCH/PDCCH.

In the present disclosure, reception of a DL signal (PDSCH/PDCCH) using an SFN may mean use of the same time/frequency resources and/or reception of the same data (PDSCH)/control information (PDCCH) from a plurality of transmission/reception points. Reception of a DL signal using an SFN may mean use of the same time/frequency resource and/or reception of the same data/control information by using a plurality of TCI states/spatial domain filters/beams/QCLs.

In the present disclosure, information related to Doppler correction (compensation), Doppler correction information, Doppler information, information related to a Doppler shift, a Doppler shift, Doppler spread, a Doppler shift and Doppler spread, a Doppler report, and Doppler report information may be interchangeably interpreted.

In the present disclosure, an SFN scheme of Rel. 16, an existing SFN scheme, an existing HST-SFN scheme, an advanced receiver function, configuration of an advanced receiver function and indication of one TCI state, and single TRP reception of Rel. 15 may be interchangeably interpreted.

In the present disclosure, an SFN scheme of Rel. 17 or later versions, a new SFN scheme, a new HST-SFN scheme, an HST-SFN scenario of Rel. 17 or later versions, and at least one of scheme 1 (HST scheme 1) and a Doppler pre-compensation scheme may be interchangeably interpreted.

### (Radio Communication Method)

### <First Embodiment>

### <<UE Capability Information/Configuration Information>>

In Rel. 16, the UE reports whether the UE has an advanced receiver function by using UE capability information (HighSpeedParameters-r16, measurementEnhancement-r16/demodulationEnhancement-r16). The advanced receiver function is at least one of to simultaneously measure TRSs from two directions (for example, front and back directions with respect to the traveling direction) of the UE and to simultaneously decode PDSCHs from the two directions. The advanced receiver function may be to satisfy performance of measurement/decoding defined in specifications. When the UE is configured with the advanced receiver function by using configuration information (RRC IE, HighSpeedConfig-r16, highSpeedMeasFlagr16/highSpeedDemodFlag-r16), the UE operates using a corresponding advanced receiver function.

The UE that has reported specific UE capability information may operate using the new SFN scheme (scheme 1/Doppler pre-compensation scheme). The UE that has received specific configuration information may operate using the new SFN scheme. The UE that has reported the specific UE capability information and received the specific configuration information may operate using the new SFN scheme.

The specific UE capability information may be UE capability information of the advanced receiver function of Rel. 16, may be new UE capability information of the new SFN scheme, or may be both of the UE capability information of the advanced receiver function of Rel. 16 and the new UE capability information. The UE that supports the new SFN scheme may require (as a condition) support of the advanced receiver function of Rel. 16.

The specific configuration information may be configuration information of the advanced receiver function of Rel. 16, may be new configuration information of the new SFN scheme, or may be both of the configuration information of the advanced receiver function of Rel. 16 and the new configuration information. The UE configured with the new SFN scheme may require (as a condition) being configured with the advanced receiver function of Rel. 16.

### <<Notification Method for TCI State(s) of Scheme 1>>

In scheme 1, one or two TCI states may be notified/indicated by an RRC IE/MAC CE/DCI. When one TCI state is notified, the UE may operate similarly to the single TRP of Rel. 15. When two TCI states are notified, the UE may operate using scheme 1.

For the PDSCH, an RRC IE/MAC CE for configuring one or two TCI states for one codepoint of the TCI field may be used for each piece of PDSCH configuration information (PDSCH-Config). The MAC CE may be the Enhanced TCI States Activation/Deactivation for UE-specific PDSCH MAC CE in Rel. 16. Scheme 1 and the single TRP may be dynamically switched by the DCI.

For the PDCCH, an RRC IE/MAC CE for configuring one or two TCI states for one codepoint of the DCI may be used for each CORESET (or piece of PDCCH configuration information (PDCCH-Config)). The MAC CE may be newly defined in specifications of Rel. 17 or later versions. Scheme 1 and the single TRP need not be dynamically switched by the DCI. Scheme 1 and the single TRP may be switched after a certain time has elapsed since reception of the DCI.

### <<Notification Method for TCI State(s) of Doppler Pre-Compensation Scheme>>

In the Doppler pre-compensation scheme, one or two TCI states may be notified/indicated by an RRC IE/MAC CE/DCI. When one TCI state is notified, the UE may operate similarly to the single TRP of Rel. 15. When two TCI states are notified, the UE may operate using the Doppler pre-compensation scheme.

For the PDSCH, an RRC IE/MAC CE for configuring one or two TCI states for one codepoint of the TCI field may be used for each piece of PDSCH configuration information (PDSCH-Config). The MAC CE may be the Enhanced TCI States Activation/Deactivation for UE-specific PDSCH MAC CE in Rel. 16. The Doppler pre-compensation scheme and the single TRP may be dynamically switched by the DCI.

For the PDCCH, an RRC IE/MAC CE for configuring one or two TCI states for one codepoint of the DCI may be used for each CORESET (or piece of PDCCH configuration information (PDCCH-Config)). The MAC CE may be newly defined in specifications of Rel. 17 or later versions. The Doppler pre-compensation scheme and the single TRP need not be dynamically switched by the DCI. The Doppler pre-compensation scheme and the single TRP may be switched after a certain time has elapsed since reception of the DCI.

### <<QCL Parameters of Doppler Pre-Compensation Scheme>>

In the Doppler pre-compensation scheme, when the same DMRS port is associated with two TCI states including the TRSs as source reference signals, one QCL assumption method of the following QCL assumption methods A, B, C, and E may be supported.
[QCL Assumption Method A] One of the two TCI states is associated with {average delay, delay spread}, and the other is associated with {average delay, delay spread, Doppler shift, Doppler spread} (that is, QCL-TypeA).
[QCL Assumption Method B] One of the two TCI states is associated with {average delay, delay spread}, and the other is associated with {Doppler shift, Doppler spread} (that is, QCL-TypeB).
[QCL Assumption Method C] One of the two TCI states is associated with {delay spread}, and the other is associated with {average delay, delay spread, Doppler shift, Doppler spread} (that is, QCL-TypeA).
[QCL Assumption Method E] Both of the two TCI states are associated with {average delay, delay spread, Doppler shift, Doppler spread} (that is, QCL-TypeA) .

The UE may measure the QCL parameters from the TRSs from the TRPs, and may use those for reception/correction of the DMRS/PDSCH/PDCCH.

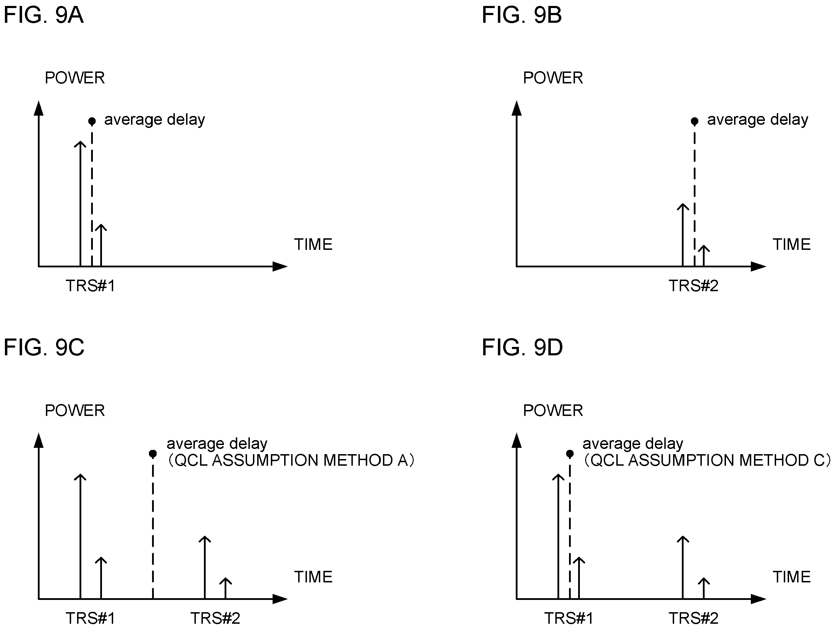

FIGS. 9A to 9D are diagrams to show examples of a delay profile and an average delay.

In the example of FIG. 9A, the UE measures the average delay, using TRS #1 corresponding to TRP #1. In the example of FIG. 9B, the UE measures the average delay, using TRS #2 corresponding to TRP #2. When QCL assumption method A is used, as in the example of FIG. 9C, the UE may measure/calculate the average delay for TRP #1 and TRP #2, using TRS #1 and TRS #2. When QCL assumption method C is used, as in the example of FIG. 9D, the UE may measure/calculate the average delay for TRP #1, using TRS #1.

When QCL assumption method A is used, one of the two TRPs may be an anchor TRP. The TCI state corresponding to the anchor TRP may be associated with QCL-TypeA, and Doppler pre-compensation need not be performed on the DMRS/PDSCH/PDCCH from the anchor TRP. The UE may measure the Doppler shift and the Doppler spread by using the TRS from the anchor TRP, and may perform Doppler compensation using the measurement results. Doppler pre-compensation may be performed on the DMRS/PDSCH/PDCCH from the TRP not being an anchor. The UE need not measure the Doppler shift and the Doppler spread by using the TRS from the TRP not being an anchor, nor need not perform Doppler compensation.

A new QCL type may be defined in specifications. The QCL parameters associated with the new QCL type may be different from at least a part of the QCL parameters associated with the existing QCL types (QCL-TypeA to QCL-TypeD). The new QCL type may be associated with QCL parameters other than the Doppler shift and the Doppler spread. In the Doppler pre-compensation scheme, the UE may assume that one of the two TCI states is of the new QCL type.

The TCI state for the PDSCH/PDCCH may be a unified TCI state (common TCI state).

### <Second Embodiment>

In the Doppler pre-compensation scheme, when two TCI states are notified, a part of specific QCL parameters in the QCL parameters of the QCL type indicated by the two TCI states may be ignored/omitted.

In the present disclosure, "the UE ignores a specific QCL parameter", "the specific QCL parameter is omitted", "the UE drops the specific QCL parameter", "the UE does not use the specific QCL parameter for reception", "the UE assumes that a DMRS port of a DL channel is not quasi co-located with an RS related to the specific QCL parameter", "the UE assumes that a DMRS port of a DL channel is not quasi co-located with an RS related to a first QCL parameter (specific QCL parameter) in a TCI state but the DMRS port is quasi co-located with an RS related to a second QCL parameter (QCL parameter other than the specific QCL parameter) in the TCI state", and "the UE does not apply the first QCL parameter (specific QCL parameter) in a TCI state to a DL channel but applies the second QCL parameter (QCL parameter other than the specific QCL parameter) in the TCI state to the DL channel" may be interchangeably interpreted.

The new QCL type need not be defined in specifications. In this case, influence on specifications can be reduced.

The UE may ignore the specific QCL parameter in one specific TCI state in the two TCI states. The specific QCL parameter may be {Doppler shift, Doppler spread}.

The UE may be indicated with one or two TCI states by a MAC CE/DCI, and determine which QCL parameter in which TCI state is to be ignored, based on other information.

Which QCL parameter in which TCI state is to be ignored may conform to at least one of the following notification methods 1 to 3.

### [Notification Method 1]

When QCL assumption method A is defined in specifications, which of the two TCI states is the specific TCI state may be notified, or may be defined in specifications. {average delay, delay spread, Doppler shift, Doppler spread} in the TCI state different from the specific TCI state in the two TCI states may be applied (need not be ignored).

### [Notification Method 2]

When QCL assumption method B is defined in specifications, which of the two TCI states is the specific TCI state may be notified, or may be defined in specifications. {average delay, delay spread} in the TCI state different from the specific TCI state in the two TCI states need not be applied (may be ignored).

### [Notification Method 3]

When both of QCL assumption methods A and B are defined in specifications, which QCL assumption method of QCL assumption methods A and B is to be applied may be configured by an RRC IE (different from that for notification of the TCI states). Which QCL assumption method of QCL assumption methods A and B is to be applied may be configured for each BWP, may be configured for each cell, may be configured for each band, or may be configured for each UE. Notification method 1 and notification method 2 may be switched by the RRC IE.

When both of QCL assumption methods A and B are defined in specifications, which QCL assumption method of QCL assumption methods A and B is to be applied need not be configured by an RRC IE (different from that for notification of the TCI states). Which QCL assumption method of QCL assumption methods A and B is to be applied may be notified for each TCI state.

In notification methods 1 to 3 described above, although QCL assumption methods A and B are described, these are not restrictive. Instead of QCL assumption method A/B, one of QCL assumption methods A, B, C, and E may be used.

The UE may assume that a DMRS port of a DL channel is not quasi co-located with an RS in one TCI state regarding the specific QCL parameter, and assume that the DMRS port is quasi co-located with an RS in the TCI state regarding a QCL parameter other than the specific QCL parameter.

According to the embodiment, the UE can apply an appropriate QCL parameter in the TCI state for reception.

### <<Specific TCI State for PDSCH>>

When the Doppler pre-compensation scheme is configured/indicated, regarding the UE, a part of the specific QCL parameters of the specific TCI state in two TCI states indicated for the PDSCH is to be ignored/omitted.

A fact that the specific QCL parameter of the specific TCI state is to be ignored/omitted may be explicitly notified/configured by an RRC IE, or need not be explicitly notified/configured.

For the two TCI states associated with one codepoint of the TCI field, the same QCL type may be configured, or different QCL types may be configured.

The specific TCI state may conform to one of the following specification methods 1 to 3.

### [Specification Method 1]

The specific TCI state may be defined in specifications. The specific TCI state may be a second (last) TCI state in the two TCI states associated with one codepoint indicated by DCI (TCI field). For example, the UE may ignore {Doppler shift, Doppler spread} of the second TCI state. When two TCI states are associated with one codepoint indicated by DCI (TCI field), the specific TCI state may be a first (initial) TCI state in the two TCI states.

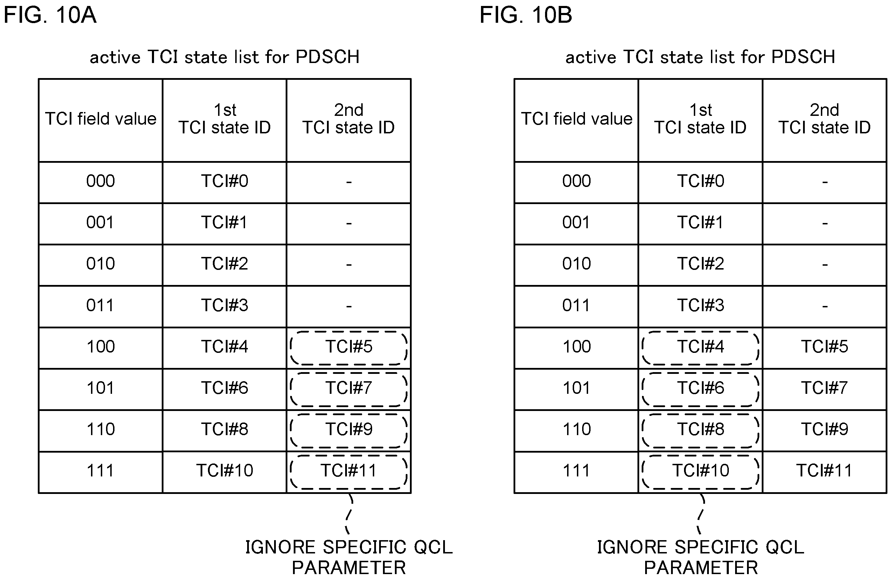

In the examples of FIGS. 10A and 10B, active TCI state IDs for respective codepoints (values) of the TCI field are indicated by a MAC CE. According to the MAC CE, one TCI state is activated for each of codepoints 000 to 011, and two TCI states are activated for each of codepoints 100 to 111.

In the example of FIG. 10A, the specific TCI state is the second TCI state. When one of codepoints 100 to 111 is indicated by the TCI field, the UE ignores the specific QCL parameter of the second TCI state in the two TCI states associated with the codepoint.

In the example of FIG. 10B, the specific TCI state is the first TCI state in the two TCI states associated with one codepoint. When one of codepoints 100 to 111 is indicated by the TCI field, the UE ignores the specific QCL parameter of the first TCI state in the two TCI states associated with the codepoint.

A maximum number of active TCI states may be defined in specifications. The maximum number of active TCI states may be 8, or may be other number.

When the base station associates two TCI states with one codepoint of the TCI field, the base station can determine and notify which of the two TCI states is the specific TCI state. With the MAC CE, two codepoints may be each associated with the same two TCI states, and the order of the two TCI states may be different between the two codepoints. For example, (TCI #4, TCI #5) may be associated with one codepoint, and (TCI #5, TCI #4) may be associated with the other codepoint. The base station can dynamically indicate the specific TCI state as one of TCIs #5 and #4 by a value of the TCI field.

### [Specification Method 2]

The specific TCI state may be indicated. The specific TCI state may conform to one of the following indication methods 1 to 3.

### [[Indication Method 1]]

For every codepoint associated with two TCI states, at which position the specific TCI state is located in the two TCI states may be indicated by an RRC IE/MAC CE/DCI. When it is indicated that the specific TCI state is the first TCI state and the codepoint associated with the two TCI states is indicated, the UE may ignore the specific QCL parameter of the first TCI state in the two TCI states. When it is indicated that the specific TCI state is the second TCI state, the UE may ignore the specific QCL parameter of the second TCI state associated with the indicated codepoint.

### [[Indication Method 2]]

For each codepoint, at which position the specific TCI state is located in the two TCI states associated with the codepoint may be indicated by an RRC IE/MAC CE/DCI. For example, indication of the specific TCI may be N bits (bitmap), and the indication of N bits may correspond to respective N codepoints of the TCI field. When a certain bit is 0, the specific TCI state corresponding to the bit may be the first TCI state, and when the bit is 1, the specific TCI state corresponding to the bit may be the second TCI state. For example, when N is 8, in the indication {01010101} of the specific TCI, the specific TCI state for codepoints 000, 010, 100, and 110 may be the first TCI state, and the specific TCI state for codepoints 001, 011, 101, and 111 may be the second TCI state. N may be the number of all of the codepoints of the TCI field, or may be the number of codepoints associated with the two TCI states.

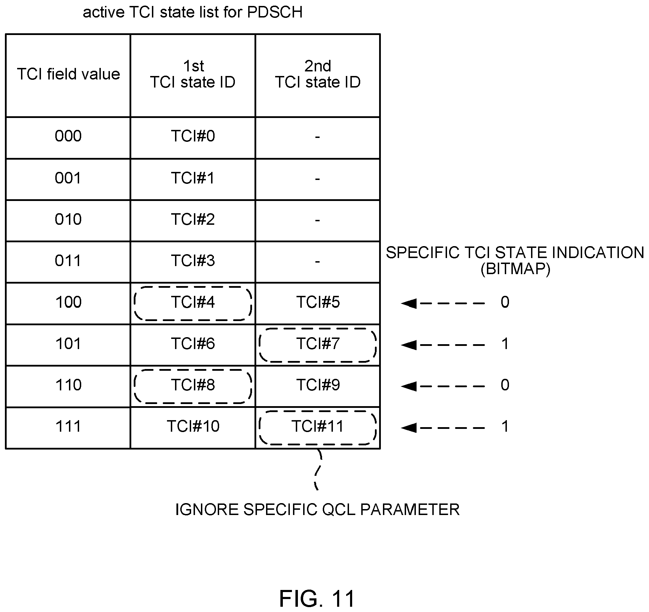

In the example of FIG. 11, active TCI state IDs for respective codepoints (values) of the TCI field are indicated by a MAC CE. According to the MAC CE, one TCI state is activated for each of codepoints 000 to 011, and two TCI states are activated for each of codepoints 100 to 111. In the example, the 4-bit indication of the specific TCI state corresponds to four codepoints 100 to 111 associated with the two TCI states. When the indication of the specific TCI state is {0101}, the specific TCI state for codepoint 100 is the first TCI state, the specific TCI state for codepoint 101 is the second TCI state, the specific TCI state for codepoint 110 is the first TCI state, and the specific TCI state for codepoint 111 is the second TCI state.

### [[Indication Method 3]]

For a specific codepoint, at which position the specific TCI state is located in the two TCI states associated with the specific codepoint may be indicated by an RRC IE/MAC CE/DCI. For example, the specific codepoint may be a maximum codepoint (for example, 111), or may be a minimum codepoint (for example, 000). In this case, overhead of indication of the specific TCI state can be reduced.

### [Specification Method 3]

The specific TCI state may be associated with a specific QCL type. For the two TCI states associated with one codepoint of the TCI field, different QCL types may be configured. The specific TCI state may be a TCI state configured with the specific QCL type among the two TCI states. The UE may ignore the specific QCL parameter in the TCI state configured with the specific QCL type among the two TCI states.

When QCL assumption method B is used, QCL type A is configured for one of the two TCI states associated with the codepoint indicated by DCI, and QCL type B is configured for the other, the UE may ignore the specific QCL parameter in the TCI state of QCL type A. In this case, overhead of indication of the specific TCI state can be reduced.

According to the operation of reception of the PDSCH using the Doppler pre-compensation scheme described above, the UE can use an appropriate QCL parameter in reception of the PDSCH using the Doppler pre-compensation scheme.

### <<Specific TCI State for PDCCH>>

When the Doppler pre-compensation scheme is configured/indicated, the UE ignores/omits a part of the specific QCL parameters of the specific TCI state in two TCI states indicated for the PDCCH. A fact that the specific QCL parameter of the specific TCI state is to be ignored/omitted may be explicitly notified/configured by an RRC IE, or need not be explicitly notified/configured.

For the two TCI states associated with one codepoint of the TCI field, the same QCL type may be configured, or different QCL types may be configured.

The specific TCI state may conform to one of the following specification methods 1 to 3.

### [Specification Method 1]

The specific TCI state may be defined in specifications. The specific TCI state may be a second (last) TCI state in the two TCI states associated with the CORESET. For example, the UE may ignore {Doppler shift, Doppler spread} of the second TCI state. When two TCI states are associated with the CORESET, the specific TCI state may be a first (initial) TCI state in the two TCI states.

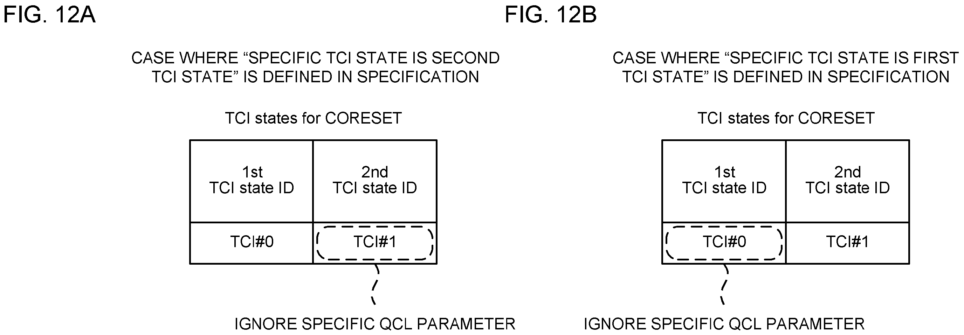

In the examples of FIGS. 12A and 12B, active TCI state IDs for the CORESET are indicated by a MAC CE. According to the MAC CE, two TCI states are activated for the CORESET.

In the example of FIG. 12A, the specific TCI state is the second TCI state. When two TCI states are activated for the CORESET, the UE ignores the specific QCL parameter of the second TCI state in the two TCI states.

In the example of FIG. 12B, the specific TCI state is the first TCI state in the two TCI states associated with the CORESET. When two TCI states are activated for the CORESET, the UE ignores the specific QCL parameter of the first TCI state in the two TCI states.

In order to change the specific TCI state, order of the two TCI states associated with the CORESET may be changed (may be exchanged) by a MAC CE.

### [Specification Method 2]

The specific TCI state may be indicated.

For the CORESET associated with two TCI states, at which position the specific TCI state is located in the two TCI states may be indicated by an RRC IE/MAC CE/DCI. When the CORESET is associated with two TCI states and it is indicated that the specific TCI state is the first TCI state, the UE may ignore the specific QCL parameter of the first TCI state in the two TCI states. When it is indicated that the specific TCI state is the second TCI state, the UE may ignore the specific QCL parameter of the second TCI state associated with the CORESET.

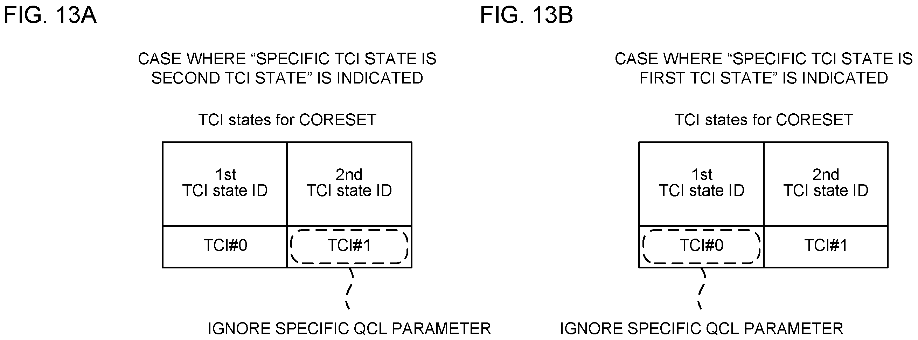

In the examples of FIGS. 13A and 13B, active TCI state IDs for the CORESET are indicated by a MAC CE. According to the MAC CE, two TCI states are activated for the CORESET.

In the example of FIG. 13A, when it is indicated that the specific TCI state is the second TCI state, the UE ignores the specific QCL parameter of the second TCI state in the two TCI states associated with the CORESET.

In the example of FIG. 13B, when it is indicated that the specific TCI state is the first TCI state, the UE ignores the specific QCL parameter of the first TCI state in the two TCI states associated with the CORESET.

For the CORESET associated with the two TCI states, when which one of the two TCI states is the specific TCI state is indicated by DCI, the UE may ignore the specific QCL parameter of the specific TCI state for the CORESET in reception of the PDCCH in the CORESET later than a specific timing. The specific timing may be a time point after a specific time has elapsed since end of ACK transmission indicated by the DCI. The specific time may be defined in specifications, may be configured by an RRC IE, or may be reported as UE capability information. The specific time may be K symbols. The specific TCI state indicated by the DCI may be applied to the PDCCH and the PDSCH. The DCI may be DCI for indicating a unified TCI state (common TCI state).

### [Specification Method 3]

The specific TCI state may be associated with a specific QCL type. For the two TCI states associated with the CORESET, different QCL types may be configured. The specific TCI state may be a TCI state configured with the specific QCL type among the two TCI states. The UE may ignore the specific QCL parameter in the TCI state configured with the specific QCL type among the two TCI states.

When QCL assumption method B is used, QCL type A is configured for one of the two TCI states associated with the CORESET, and QCL type B is configured for the other, the UE may ignore the specific QCL parameter in the TCI state of QCL type A. In this case, overhead of indication of the specific TCI state can be reduced.

According to the operation of reception of the PDCCH using the Doppler pre-compensation scheme described above, the UE can use an appropriate QCL parameter in reception of the PDCCH using the Doppler pre-compensation scheme.

### <Third Embodiment>

The SFN scheme of a DL channel may be configured by an RRC IE/MAC CE/DCI.

The SFN scheme of a DL channel may be configured by an RRC IE (RRC parameter).

One of scheme 1 and the Doppler pre-compensation scheme may be configured by a specific parameter (RRC IE). When the SFN scheme of one of scheme 1 and the Doppler pre-compensation scheme is configured by the specific parameter, and two TCI states are indicated by an RRC IE/MAC CE/DCI, the UE may operate using the SFN scheme.

### <<Configuration Common to PDSCH and PDCCH>>

The PDCCH configuration information (PDCCH-Config) may include the specific parameter. The UE may apply the specific parameter configured by the PDCCH configuration information for a certain BWP of a certain cell to all of the PDCCHs/PDSCHs in the cell and the BWP.

CORESET configuration information (ControlResourceSet) may include the specific parameter. The UE may apply the specific parameter configured by the CORESET configuration information indicating a certain CORESET to all of the PDCCHs in the CORESET and all of the PDSCHs scheduled by the PDCCHs.

The PDSCH configuration information (PDSCH-Config) may include the specific parameter. The UE may apply the specific parameter configured by the PDSCH configuration information for a certain BWP of a certain cell to all of the PDCCHs/PDSCHs in the cell and the BWP.

The specific parameter may be configured for each cell or BWP. Serving cell configuration information (ServingCellConfig) or BWP configuration information (BWP, downlink BWP-dedicated configuration information (BWP-DownlinkDedicated)) may include the specific parameter. The UE may apply the specific parameter for a certain cell or a certain BWP to all of the PDCCHs/PDSCHs in the cell or the BWP.

The specific parameter may be configured for each UE. The UE may apply the specific parameter to all of the PDCCHs/PDSCHs in all of the BWPs/cells/bands.

When the configuration of the SFN scheme for the PDCCH and the PDSCH is the same, UE processing can be simplified.

### <<Configuration Dedicated to PDSCH and PDCCH>>

The PDCCH configuration information (PDCCH-Config) may include the specific parameter. The UE may apply the specific parameter configured by the PDCCH configuration information for a certain BWP of a certain cell to all of the PDCCHs in the cell and the BWP.

The CORESET configuration information (ControlResourceSet) may include the specific parameter. The UE may apply the specific parameter configured by the CORESET configuration information indicating a certain CORESET to all of the PDCCHs in the CORESET.

The PDSCH configuration information (PDSCH-Config) may include the specific parameter. The UE may apply the specific parameter configured by the PDSCH configuration information for a certain BWP of a certain cell to all of the PDSCHs in the cell and the BWP.

The specific parameter for the PDSCH and the specific parameter for the PDCCH may be configured for each cell or BWP. The serving cell configuration information (ServingCellConfig) or the BWP configuration information (BWP, downlink BWP-dedicated configuration information (BWP-DownlinkDedicated)) may include the specific parameter for the PDSCH and the specific parameter for the PDCCH. The UE may apply the specific parameter for the PDSCH for a certain cell or a certain BWP to all of the PDSCHs in the cell or the BWP. The UE may apply the specific parameter for the PDCCH for a certain cell or a certain BWP to all of the PDCCHs in the cell or the BWP.

The specific parameter for the PDSCH and the specific parameter for the PDCCH may be configured for each UE. The UE may apply the specific parameter for the PDSCH to all of the PDSCHs in all of the BWPs/cells/bands. The UE may apply the specific parameter for the PDCCH to all of the PDCCHs in all of the BWPs/cells/bands.

When the SFN scheme for the PDSCH and the SFN scheme for the PDCCH are separately configured, the SFN scheme can be flexibly configured.

### <Fourth Embodiment>

The UE may determine (may switch) the SFN scheme to be used for the PDCCH, based on an RRC IE (RRC parameter) and the number of TCI states for the PDCCH.

The SFN scheme common to all of the CORESETs may be configured. The SFN scheme need not be applied to all of the CORESETs.

One of SFN scheme (scheme 1 or Doppler pre-compensation scheme) operation and single TRP operation may be indicated by an RRC IE/MAC CE/DCI.

For the PDCCH, dynamically switching between the SFN scheme operation and the single TRP operation may be permitted. The dynamically indicated SFN scheme operation or single TRP operation may be applied to the PDSCH.

The UE may apply the single TRP operation to reception of the PDCCH in the CORESET associated with one TCI state. The UE may apply the SFN scheme operation to reception of the PDCCH in the CORESET associated with two TCI states.

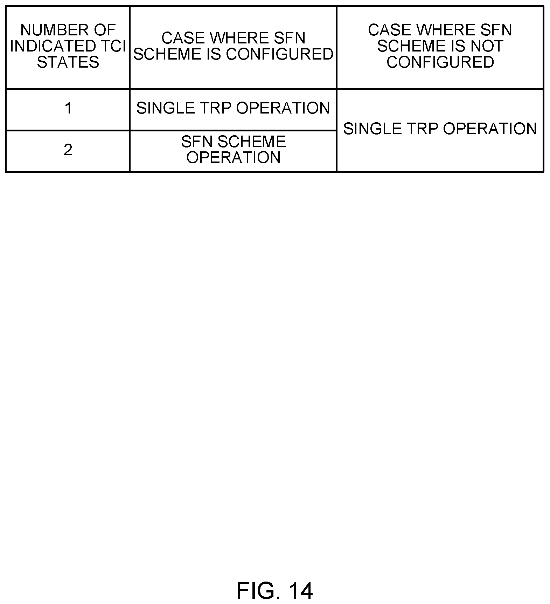

In the example of FIG. 14, whether to use the SFN scheme is configured for the UE by an RRC IE. When the SFN scheme is not configured, the UE applies the single TRP operation to reception of the PDCCH in the CORESET, regardless of the number of TCI states associated with the CORESET. When the SFN scheme is configured and the number of TCI states associated with the CORESET is 1, the UE applies the single TRP operation to reception of the PDCCH in the CORESET. When the SFN scheme is configured and the number of TCI states associated with the CORESET is 2, the UE applies the SFN scheme operation to reception of the PDCCH in the

### CORESET.

The UE may receive DCI for indicating one or two TCI states for the CORESET. The UE that has received the DCI may ignore the specific QCL parameter of the specific TCI state for the CORESET in reception of the PDCCH in the CORESET later than a specific timing. The specific timing may be a time point after a specific time has elapsed since end of ACK transmission indicated by the DCI. The specific time may be defined in specifications, may be configured by an RRC IE, or may be reported as UE capability information. The specific time may be K symbols. The one or two TCI states indicated by the DCI may be applied to the PDCCH and the PDSCH. The one or two TCI states indicated by the DCI may be unified TCI state(s) (common TCI state(s)).

Only the UE that has reported a UE capability indicating support of dynamic switch between the SFN scheme operation and the single TRP operation may receive indication of one of the SFN scheme operation and the single TRP operation. For all of the CORESETs of the UE that has not reported the UE capability, the same number of TCI states may be configured/indicated. For example, for all of the CORESETs of the UE that has not reported the UE capability, two TCI states may be configured/indicated.

For the PDCCH, dynamically switching between the SFN scheme operation and the single TRP operation need not be permitted. It may be defined that the UE does not assume that different numbers of TCI states are indicated for a plurality of different CORESETs. For all of the CORESETs, the same number of TCI states may be configured/indicated. For example, for all of the CORESETs, two TCI states may be configured/indicated.

According to the embodiment, the SFN scheme operation and the single TRP operation can be dynamically switched, and appropriate operation can be performed depending on a situation.

### <Other Embodiments>

A higher layer parameter (RRC IE)/UE capability corresponding to a function (characteristic, feature) in each embodiment described above may be defined. The higher layer parameter may indicate whether the function is to be enabled. The UE capability may indicate whether the UE supports the function.

The UE configured with the higher layer parameter corresponding to the function may perform the function. "The UE not configured with the higher layer parameter corresponding to the function does not perform the function (for example, in conformity to Rel. 15/16)" may be defined.

The UE that has reported the UE capability indicating support of the function may perform the function. "The UE that has not reported the UE capability indicating support of the function does not perform the function (for example, in conformity to Rel. 15/16)" may be defined.

When the UE reports the UE capability indicating support of the function and is configured with the higher layer parameter corresponding to the function, the UE may perform the function. "When the UE does not report the UE capability indicating support of the function or is not configured with the higher layer parameter corresponding to the function, the UE does not perform the function (for example, in conformity to Rel. 15/16)" may be defined.

The UE capability may indicate whether to support the HST-SFN scheme.

The UE capability may indicate whether to support dynamic switch between the HST-SFN scheme and the single TRP using the TCI field for the PDSCH.

The UE capability may indicate whether to support dynamic switch between the HST-SFN scheme and the single TRP using the number of TCI states associated with the CORESET for the PDCCH.

The UE capability may indicate whether to support a function related to the specific TCI state for the PDSCH of the first embodiment. The UE capability may indicate whether to support a function related to the specific TCI state for the PDCCH of the first embodiment.

The UE capability may indicate whether to support the Doppler precorrection scheme.

The UE capability may be at least one of the UE capability information of the advanced receiver function of Rel. 16 and the new UE capability information.

According to the embodiments described above, the UE can implement the above functions while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

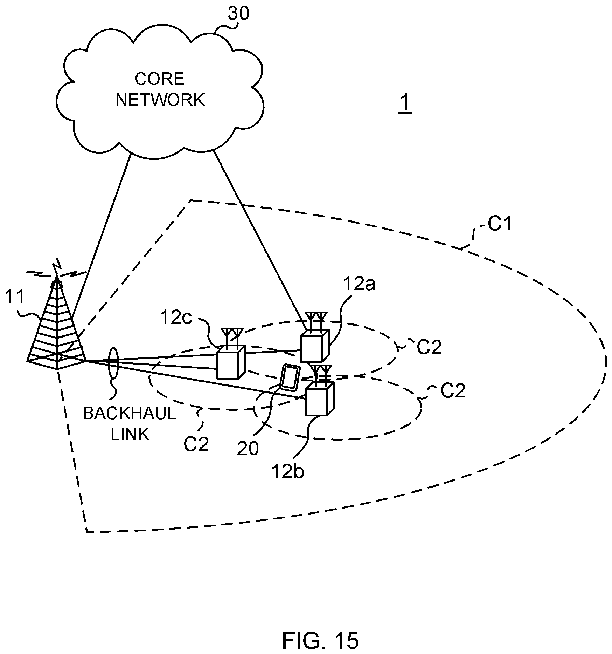

FIG. 15 is a diagram to show an example of a schematic structure of the radio communication system according to one embodiment. The radio communication system 1 may be a system implementing a communication using Long Term Evolution (LTE), 5th generation mobile communication system New Radio (5G NR), and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multicarrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH/PUSCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

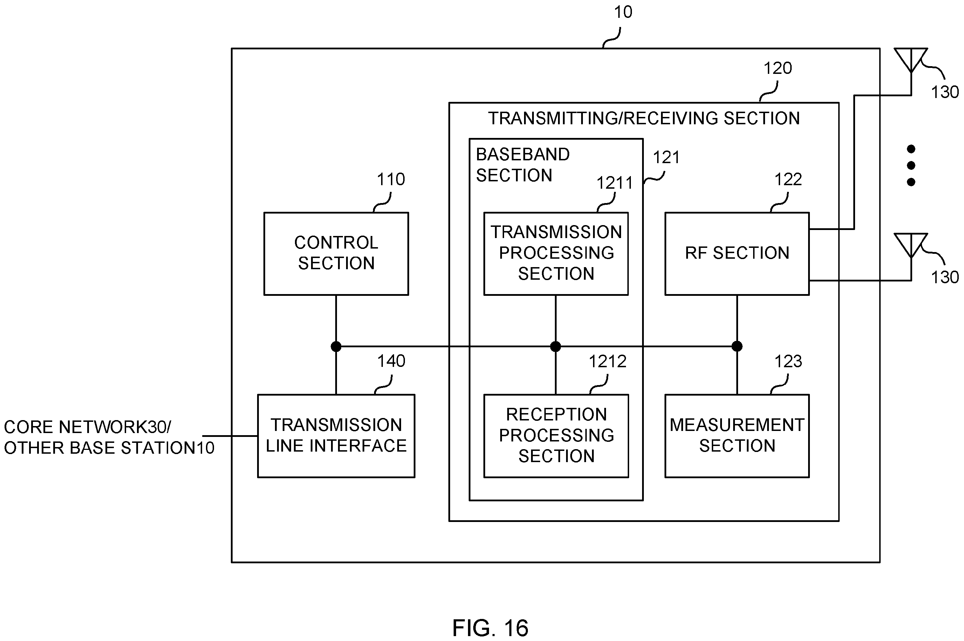

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data, control information, and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information indicating two transmission configuration indication (TCI) states for a physical downlink shared channel (PDSCH). The control section 110 may control transmission of the PDSCH, based on the two TCI states. A first quasi co-location (QCL) parameter in a plurality of QCL parameters included in a specific TCI state in the two TCI states may not be applied to reception of the PDSCH but a second QCL parameter other than the first QCL parameter in the plurality of QCL parameters may be applied to the reception of the PDSCH.

The transmitting/receiving section 120 may transmit information indicating two transmission configuration indication (TCI) states for a physical downlink control channel (PDCCH). The control section 110 may control transmission of the PDCCH, based on the two TCI states. A first quasi co-location (QCL) parameter in a plurality of QCL parameters included in a specific TCI state in the two TCI states may not be applied to reception of the PDCCH but a second QCL parameter other than the first QCL parameter in the plurality of QCL parameters may be applied to the reception of the PDCCH.

The transmitting/receiving section 120 may transmit indication of one or more transmission configuration indication (TCI) states. The control section 110 may determine whether to apply a single frequency network (SFN) scheme to transmission of a physical downlink shared channel (PDCCH), based on the number of the TCI states.

### (User Terminal)

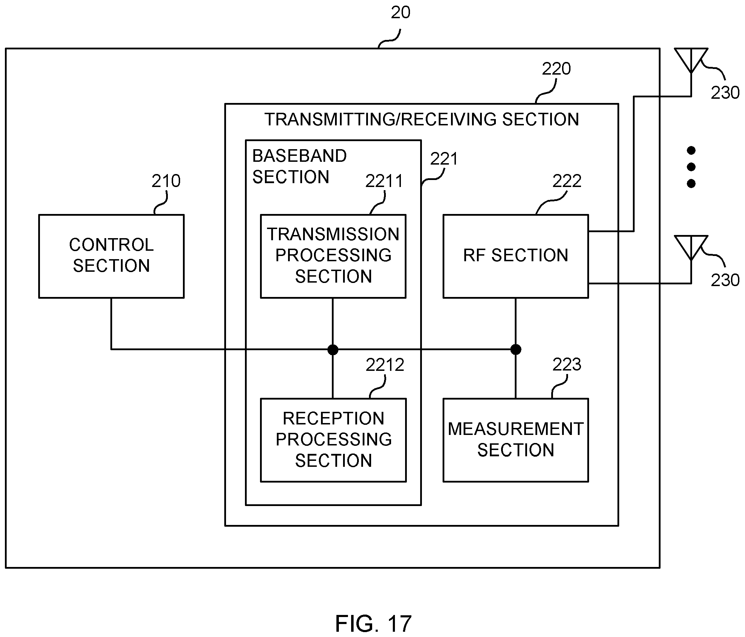

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information indicating two transmission configuration indication (TCI) states for a physical downlink shared channel (PDSCH). The control section 210 may not apply a first quasi co-location (QCL) parameter in a plurality of QCL parameters included in a specific TCI state in the two TCI states to reception of the PDSCH but apply a second QCL parameter other than the first QCL parameter in the plurality of QCL parameters to the reception of the PDSCH.

The control section 210 may determine the specific TCI state, based on one of a fact that a position of the specific TCI state in the two TCI states is defined in a specification, a fact that the position of the specific TCI state in the two TCI states is notified, and a fact that the specific TCI state has a specific QCL type.

The first QCL parameter may include a Doppler shift and Doppler spread.

The control section 210 may apply the two TCI states to reception of the PDSCH and reception of a physical downlink control channel.

The transmitting/receiving section 220 may receive information indicating two transmission configuration indication (TCI) states for a physical downlink control channel (PDCCH). The control section 210 may not apply a first quasi co-location (QCL) parameter in a plurality of QCL parameters included in a specific TCI state in the two TCI states to reception of the PDCCH but apply a second QCL parameter other than the first QCL parameter in the plurality of QCL parameters to the reception of the PDCCH.

The control section 210 may determine the specific TCI state, based on one of a fact that a position of the specific TCI state in the two TCI states is defined in a specification, a fact that the position of the specific TCI state in the two TCI states is notified, and a fact that the specific TCI state has a specific QCL type.

The first QCL parameter may include a Doppler shift and Doppler spread.

The control section 210 may apply the two TCI states to reception of the PDCCH and reception of a physical downlink shared channel.

The transmitting/receiving section 220 may receive indication of one or more transmission configuration indication (TCI) states. The control section 210 may determine whether to apply a single frequency network (SFN) scheme to reception of a physical downlink shared channel (PDCCH), based on the number of the TCI states.

When the number of the TCI states is 1, the control section may not apply the SFN scheme to reception of the PDCCH, and when the number of the TCI states is 2, the control section may apply the SFN scheme to the reception of the PDCCH.

The indication may be downlink control information.

The transmitting/receiving section 220 may receive the PDCCH later than a specific timing based on the downlink control information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

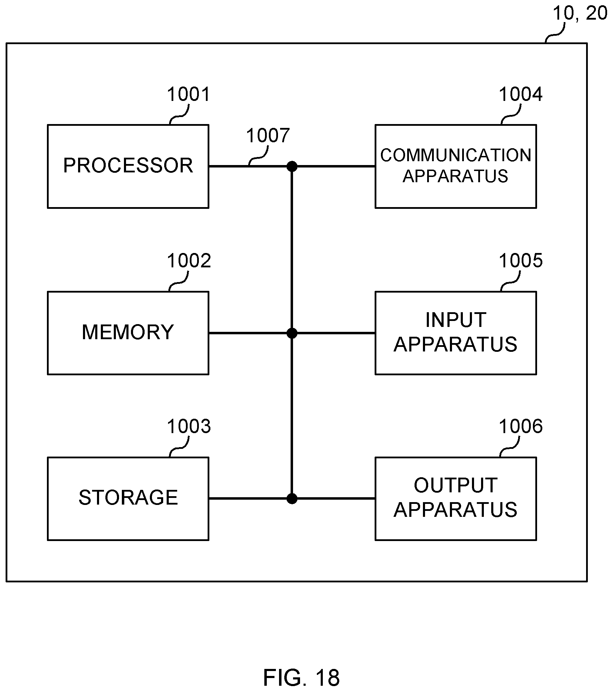

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs) .

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminalto-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives indication of one or more transmission configuration indication (TCI) states; and
a control section that determines whether to apply a single frequency network (SFN) scheme to reception of a physical downlink shared channel (PDCCH), based on the number of the TCI states.

2. The terminal according to claim 1, wherein
when the number of the TCI states is 1, the control section does not apply the SFN scheme to the reception of the PDCCH, and
when the number of the TCI states is 2, the control section applies the SFN scheme to the reception of the PDCCH.

3. The terminal according to claim 1 or 2, wherein
the indication is downlink control information.

4. The terminal according to claim 3, wherein
the receiving section receives the PDCCH later than a specific timing based on the downlink control information.

5. A radio communication method for a terminal, the radio communication method comprising:
receiving indication of one or more transmission configuration indication (TCI) states; and
determining whether to apply a single frequency network (SFN) scheme to reception of a physical downlink shared channel (PDCCH), based on the number of the TCI states.

6. A base station comprising:
a transmitting section that transmits indication of one or more transmission configuration indication (TCI) states; and
a control section that determines whether to apply a single frequency network (SFN) scheme to transmission of a physical downlink shared channel (PDCCH), based on the number of the TCI states.
